# EUROPÄISCHE PATENTSCHRIFT

(11) **EP 2 512 698 B1**
(45) Veröffentlichungstag und Bekanntmachung des Hinweises auf die Patenterteilung: **11.11.2015**
(21) Anmeldenummer: 11735651.9
(22) Anmeldetag: 25.07.2011
(51) Int. Cl.: B08B 5/04, B08B 15/02, B08B 3/02, B01D 53/00, F28D 21/00, B01D 53/26

(54) **VERFAHREN UND EINE REINIGUNGSANLAGE ZUM REINIGEN INDUSTRIELL GEFERTIGTER BAUTEILE**
METHOD AND A CLEANING SYSTEM FOR CLEANING INDUSTRIALLY PRODUCED COMPONENTS
PROCÉDÉ ET INSTALLATION DE NETTOYAGE POUR NETTOYER DES PIÈCES FABRIQUÉES INDUSTRIELLEMENT

(30) Priorität: 11.10.2010 AT 16862010
(43) Veröffentlichungstag der Anmeldung: 24.10.2012
(73) Patentinhaber: TMS Turnkey Manufacturing Solutions GmbH, 4031 Linz (AT)
(72) Erfinder: WITTENDORFER, Reiner, 4020 Linz (AT)
(74) Vertreter: Patentanwälte Pinter & Weiss OG
(86) Internationale Anmeldenummer: PCT/EP2011/062726
(87) Internationale Veröffentlichungsnummer: WO 2012/048921

(56) Entgegenhaltungen:
- EP-A1- 0 053 727
- EP-A1- 0 492 814
- EP-A2- 0 940 167
- AU-B2- 752 122
- DE-A1- 3 734 994
- DE-A1- 10 202 945

## Beschreibung

Die gegenständliche Erfindung betrifft ein Verfahren und eine Reinigungsanlage zum Reinigen industriell gefertigter Bauteile mit einem Reinigungsraum und einer Absaugung zum Absaugen von Abluft aus dem Reinigungsraum und einer Rückgewinnungseinrichtung, in der ein Kälteregister, über das die Abluft geführt ist und dabei abgekühlt und getrocknet wird, und ein Wärmeregister angeordnet sind, wobei das Kälteregister und das Wärmeregister Teil einer Kältemaschine sind und wobei die abgesaugte Abluft in der Rückgewinnungseinrichtung über das Wärmeregister der Kältemaschine geführt ist und dabei im Wesentlichen auf die Temperatur der Abluft erwärmt wird und die derart erwärmte, getrocknete Abluft dem Reinigungsraum als vorgewärmte, trockene Zuluft über eine Zuluftleitung zugeführt wird.

Anlagen zum Reinigen von industriell gefertigten Bauteilen, z.B. spanabhebend bearbeitete Bauteile, benötigen im Betrieb erhebliche Ressourcen, wie z.B. Wasser, Reiniger und Energie. Die Ursache für diese Verluste liegen im Wesentlichen darin, dass die Bauteile mit warmen Reinigungsmitteln gereinigt werden müssen, wodurch in der Reinigungsanlage Reinigungsmittel-Schwaden (übersättigter Dampf) entstehen, die bisher einfach aus der Anlage abgesaugt und an die Umwelt abgegeben wurde. Damit verliert man zum Einen Wasser und Reiniger und zum Anderen Wärmeenergie, die in den abgeführten Reinigungsmittel-Schwaden enthalten sind. Berechnungen an einer typischen Reinigungsanlage mit einem Reinigungstankvolumen von 20001, einer Reinigungstemperatur von 60°C, einem Abluftvolumen von 4500m³ und einer Heizleistung von 110kW haben einen Wärmeverlust von 55kW/h und einen Wasserverlust von 90l/h ergeben, was das Problem offensichtlich macht. Ein anderes Problem der Abführung der Reinigungsmittel-Schwaden aus der Reinigungsanlage liegt darin, dass mit dem Reinigungsmittel gleichzeitig auch darin enthaltener Reiniger abgeführt wird. Damit muss in der Anlage immer Wasser und Reiniger ergänzt werden, um die Verlustmenge durch Ausdampfung auszugleichen, womit einerseits auch Reiniger verschwendet wird und andererseits über die Zeit auch das Reinigungsbad überdosiert wird.

Der Anlage muss die abgesaugte Abluftmenge natürlich auch wieder zugeführt werden, was in der Regel einfach über die Hallenluft erfolgt. Die zugeführte Hallenluft kühlt allerdings den Innenraum der Reinigungsanlage und das zu reinigenden Bauteil. Das muss über die Tankheizung des Reinigungsmittels wieder ausgeglichen werden, was die Energiebilanz der Anlage natürlich nachteilig verschlechtert. Vor allem ist es für nachfolgende Prozesse, wie z.B. eine Vakuumtrocknung des Bauteils, erforderlich, dass das Bauteil ausreichend Wärmeengerie gespeichert hat und eine ausreichende Eigentemperatur besitzt. Wird das Bauteil nun über die zugeführte Zuluft gekühlt, ist das sehr nachteilig.

Bei Verwendung von Robotermanipulatoren in der Anlage, z.B. zum Bewegen der zu reinigenden Bauteile oder zum Halten der Reinigungs- oder Trocknungsdüsen, ist es darüber hinaus wichtig, die für die Roboter zulässigen Umgebungsverhältnisse, wie z.B. Luftfeuchtigkeit, Reinigeranteil in der Luft, etc., genau einzustellen und einzuhalten, was bei den bisherigen Anlagen schwierig bis gar nicht zu bewerkstelligen war. Ansonsten kann es zu verkürzten Serviceintervallen der Roboter und damit verbunden häufigen Anlagenausfällen kommen.

Eine weitere typische Verlustquelle bei solchen Anlagen ist der Bauteilwechsel, da dabei die Anlage geöffnet werden muss, wodurch ein Luftaustausch zwischen Anlageninnenraum und Umgebung möglich ist. Der Luftaustausch kommt dabei dadurch zustande, dass durch die hohe Temperatur in der Anlage gegenüber der Umgebung auch ein höherer Druck herrscht. Bei geöffneter Schotttür dringen somit Reinigungsmittel-Schwaden nach außen. Durch einen solchen Luftaustausch kommt es natürlich zu unerwünschten Ressourcenverlusten (Reinigungsmittel, Wärme), was die Energiebilanz der Anlage verschlechtert.

Um dieser Ressourcenvergeudung vorzubeugen sind schon industrielle Systeme bekannt geworden, die die im abgesaugten Wasserdampf enthaltene Wärme und das darin enthaltene Wasser rückgewinnen. So ist z.B. aus der US 4 402 332 A eine Anlage zur Vorbehandlung von Autokarosserien vor der Lackierung bekannt, bei der der beim Reinigen der Karosserien entstehende Wasserdampf an gekühlten Kondensatoroberflächen kondensiert wird. Das abgeschiedene Wasser wird gesammelt und dem Prozess rückgeführt. Weiters wird die Kondensationswärme genutzt, z.B. in einem Wärmetauscher zum Erwärmen von in die Anlage zugeführter Zuluft oder in einer Wärmepumpe für einen wärmebenötigenden Prozess. In einer solchen Anlage wird allerdings keine Luft umgewälzt, sondern es wird lediglich dafür gesorgt, dass der entstehende Wasserdampf nicht ungenutzt nach außen dringt.

Die DE 30 38 275 zeigt wiederum eine Anlage zur Wärmerückgewinnung an Metallreinigungsmaschinen. Dazu wird der sich in der Anlage bildende Wasserdampf mittels eines Ventilators abgesaugt und einer Rückgewinnungsanlage zugeführt. Darin wird der Wasserdampf über einen Verdampfer einer Kältemaschine geführt, an dem der Wasserdampf kondensiert. Das abgeschiedene Wasser wird gesammelt und in das Reinigungsbad rückgeführt. Das Reinigungsmittel wird über einen Wärmetauscher der Kältemaschine umgewälzt, womit das Reinigungsmittel erwärmt wird und weniger Energie zum Aufheizen des Reinigungsmittels benötigt wird. Die rückgewonnene Wärme kann dabei auch zur Vorwärmung der in die Reinigungsanlage eintretenden Zuluft verwendet werden. Damit ist aber immer eine Zusatzheizung für das Reinigungsmittel in der Anlage erforderlich, da mit dieser Anlage, die Temperatur der vorerwärmten Zuluft immer unter der Temperatur der abgesaugten Abluft liegt und die Zuluft damit in der Anlage eine kühlende Wirkung hat, was für den Gesamtprozess nachteilig ist, wie oben bereits ausgeführt. Außerdem wäre hier eine aufwendige Luftmengenregelung vorzusehen. Darüber hinaus werden bei einer solchen Anlage nicht die gesamte Wärme und das gesamte Wasser rückgewonnen, da durch die nach außen abgeführte Luftmenge immer Restverluste an die Umgebung entstehen.

Aus der DE 10 2008 039 747 B4 ist es bekannt, die feuchte Abluft aus einem industriellen Prozess (Reinigen, Trocknen, Spülen) in einem Verdampfer zu kondensieren, um das in den abgesaugten Schwaden enthaltene Wasser rückzugewinnen. Die dabei anfallende Wärme wird in einem nachfolgenden Luft/Luft- und einem Luft/Wasser-Wärmetauscher abgegeben, wobei der Luft/Luft-Wärmetauscher als Kältemaschine ausgeführt sein soll. Auch hier kann der Zuluftstrom nicht die Temperatur des Abluftstromes erreichen, womit in der Anlage wieder zusätzliche Wärme zugeführt werden muss, was die Gesamtenergiebilanz verschlechtert.

Es sind, z.B. aus der EP 940 167 A2 oder der EP 492 814 A1, auch Anlagen bekannt geworden, in denen eine lösemittelhaltige Abluft in einem Adsorber gereinigt und wieder rückgeführt wird. In der EP 492 814 A1 wird dabei die Luft in einer Gassperre gereinigt und die Bauteile gewechselt, sobald die Abluft einen gewünschten Reinigungsgrad aufweist. Die Desorption erfolgt mit der Luft im Reinigungsraum. In der EP 940 167 A2 wiederum wird die gereinigte Abluft zugeführt, um in einem Durchgangsbereich einen Vorhang aus gereinigtem Prozessgas auszubilden. Dabei wird am Durchgang zugeführtes Prozessgas abgesaugt und an die Atmosphäre abgegeben, um die Zuführung von Inertgas in die Anlage auszugleichen.

Der DE 37 34 994 A1 kann eine Trocknungseinrichtung entnommen werden, in der Bauteile durch eine Umlufttrocknung getrocknet werden. Dazu wird feuchte Luft während des Trocknungsvorganges entnommen, getrocknet und wieder erwärmt und auf den Bauteil geblasen. Zum Zeitpunkt des Bauteilwechsels nach dem Trocknen besteht somit keine Gefahr mehr, dass Reinigungsmittelschwaden entweichen könnten, weshalb die DE 37 34 994 A1 hinsichtlich des Ressourcenverlustes bei einem Bauteilwechsel unbeachtlich ist.

Aus der DE 102 02 945 A1 ist ein Luftvorhang bekannt, der temporär während des Offenstehens einer Beschickungsöffnung im Bereich der Beschickungsöffnung ausgebildet wird, um das nach außen Dringen von Schadstoffen aus Bearbeitungsmaschinen zu verhindern. Dazu wird Luft aus dem Innenraum über ein Gebläse im Inneren der Bearbeitungsmaschine umgewälzt, wobei durch die Umwälzung auch keine Ressourcenrückgewinnung durchgeführt wird:

Aus der EP 053 727 A1 ist wiederum eine Waschmaschine mit integriertem Trockner bekannt, bei der im Trocknungsvorgang Lösungsmittel und Wärme rückgewonnen wird. Die Ressourcenrückgewinnung erfolgt in einer Wärmepumpe, über die die Trocknungsluft geführt. Dazu wird der Trocknungsluft zuerst zur Kondensation der Lösungsmitteldämpfe Wärme entzogen, die der Trocknungsluft vor dem Rückführen in die Waschtrommel wieder zugeführt wird. Ein Waschvorgang ist dabei aber ein längerer Prozess und es kommt zu verhältnismäßig wenigen Waschgutwechseln, sodass der Vorgang des Wechsels des Waschguts in einer Gesamtressourcenbetrachtung unberücksichtigt bleiben kann. Außerdem ist beim Wechsel des Waschguts schon das gesamte Lösungsmittel und damit die darin enthaltene Wärme entzogen, sodass der Waschgutwechsels aus Sicht eines Ressourcenverlusts unbeachtlich ist.

Es ist daher eine Aufgabe der gegenständlichen Erfindung, die Ressourcenverluste, insbesondere von Reinigungsmittel und Wärme (Energie), bei einer Reinigungsanlage bzw. einem Verfahren zum Reinigen von industriell gefertigten Bauteilen zu verringern.

Diese Aufgabe wird dadurch gelöst, indem die Zuluftleitung im Bereich einer Schotttür in den Reinigungsraum mündet, um im Reinigungsraum hinter der Schotttür durch die zugeführte Zuluft einen Luftvorhang auszubilden. Damit wird ein Umluftbetrieb realisiert, bei dem die abgesaugte Abluft in der Reinigungsanlage im Umluftbetrieb umgewälzt wird und mit im Wesentlichen derselben Temperatur wieder in die Anlage rückgeführt werden kann. Damit gibt es keinen Austausch der Abluft mit der Umgebung, sondern die in der Abluft enthaltene Wärme wird rückgewonnen und dem Prozess wieder zugeführt. So kann der für den Betrieb der Reinigungsanlage notwendige Energieaufwand auch deutlich verringert werden, da die Zuluft die Prozesstemperatur hat und damit im Betrieb keine zusätzliche Wärmezufuhr in der Anlage notwendig ist. Ebenso wird damit ein Luftaustausch, und damit ein dadurch hervorgerufener Ressourcenverlust, bei geöffneter Schotttür durch die Ausbildung eines Luftvorhanges vor der Schotttür im Wesentlichen verhindert.

Ebenso ist es vorteilhaft, wenn bei geöffneter Schotttür ein Teil der Zuluft über die Abblasleitung an die Umgebung abgegeben wird. Hier müssen nur geringe Mengen an Zuluft abgeblasen werden, um den Druck im Reinigungsraum in etwa auf den Umgebungsdruck abzusenken, womit ein Luftaustausch, und damit ein dadurch hervorgerufener Ressourcenverlust, bei geöffneter Schotttür zumindest reduziert wird. Das Abblasen von getrockneter, vorgewärmter Zuluft stellt dabei einen erheblich geringeren Ressourcenverlust dar, als nach außen dringende Reinigungsmittel-Schwaden bei geöffneter Schotttür.

Besonders vorteilhaft wird das im Kälteregister kondensierte Reinigungsmittel über eine Rückführleitung in den Reinigungsmittelbehälter rückgeführt, da dann auch das mit der Abluft aus der Reinigungsanlage abgeführte Reinigungsmittel vollständig rückgeführt werden kann. Hier wird durch den Umluftbetrieb auch noch das nach dem Kälteregister noch in der Abluft enthaltene Reinigungsmittel rückgeführt, wodurch es durch die Absaugung zu praktisch keinen Verlusten an Reinigungsmittel kommt. Durch die gezielte Rückführung des Reinigungsmittel-Kondensats in den Reinigungskreislauf wird der Verbrauch an Wasser und Reiniger somit deutlich reduziert. Eine ständige Ergänzung des Reinigungsbadniveaus wegen Ausdampfung entfällt. Damit bleibt auch die Reinigerkonzentrierung länger konstant und sichert so einen stabilen Reinigungsprozess.

Durch diese Lösungen wird auch ein stabiles Reinigungsraumklima ermöglicht, was für die Verwendung von Robotern in der Reinigungsanlage besonders vorteilhaft ist.

Wenn ein Trocknungsgebläse vorgesehen ist, wird vorteilhafter Weise ein Teil der erwärmten, getrockneten Abluft über das Trocknungsgebläse in den Reinigungsraum zugeführt. Damit kommt es auch durch einen Trocknungsvorgang zu keinen Verlusten an Wärme und/oder Reinigungsmittel. Damit verliert das Bauteil auch beim Trocknungsvorgang keine Wärme, wodurch das Bauteil für nachfolgende Prozesse, wie z. B. eine Vakuumtrocknung, optimal vorbereitet ist.

In der Kältemaschine ist vorteilhaft ein Kältekreis realisiert, bei dem im Kälteregister ein Kältemittel Wärme von der durch das Kälteregister strömende Abluft aufnimmt, der Verdichter das Kältemittel verdichtet und dem Wärmeregister zuführt, wo es Wärme an die durch das Wärmeregister strömende Abluft abgibt, das Kältemittel vom Wärmeregister in die Kühleinheit geleitet wird, wo das Kältemittel weiter abkühlt und Kältemittel von der Kühleinheit in das Kälteregister geleitet wird. Ein solcher Kältekreis kann mit sehr geringen Verlusten betrieben werden. Außerdem wird die Wärmeaufnahme des Kältemittels im Kälteregister durch die zusätzliche Abkühlung in der Kühleinheit verbessert, wodurch auch die Temperaturdifferenz für den Wärmetransport vorteilhaft vergrößert wird. Auf diese Weise kann die Zuluft ohne zusätzlichen großen Aufwand auf die Temperatur der Abluft gebracht werden.

Wenn ein Aerosol in die Abluft aus dem Reinigungsraum eingebracht wird, kann der Wirkungsgrad der Kondensation verbessert werden, womit mehr Wärmeengerie und mehr Kondensat aus der Abluft rückgewonnen werden kann.

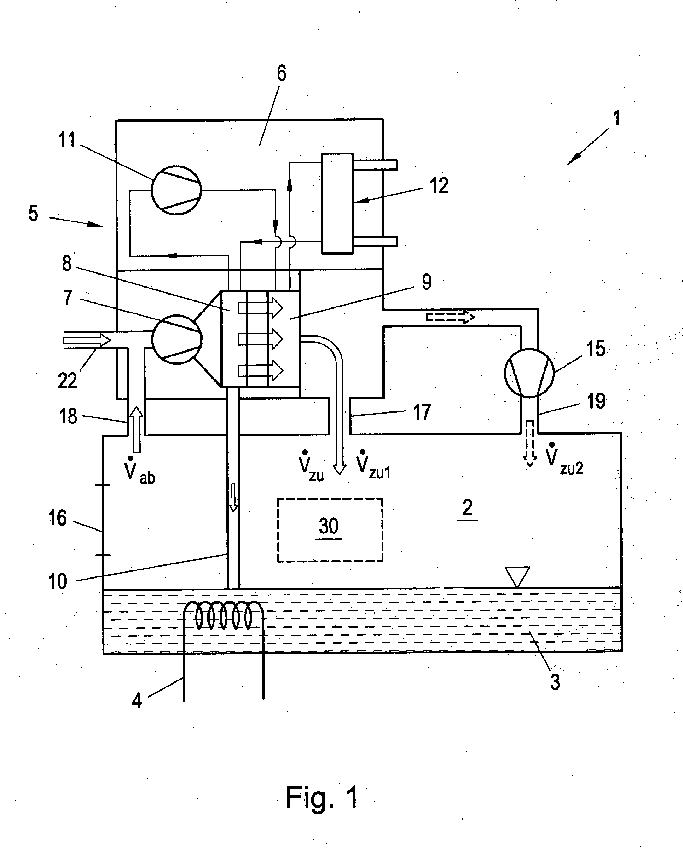

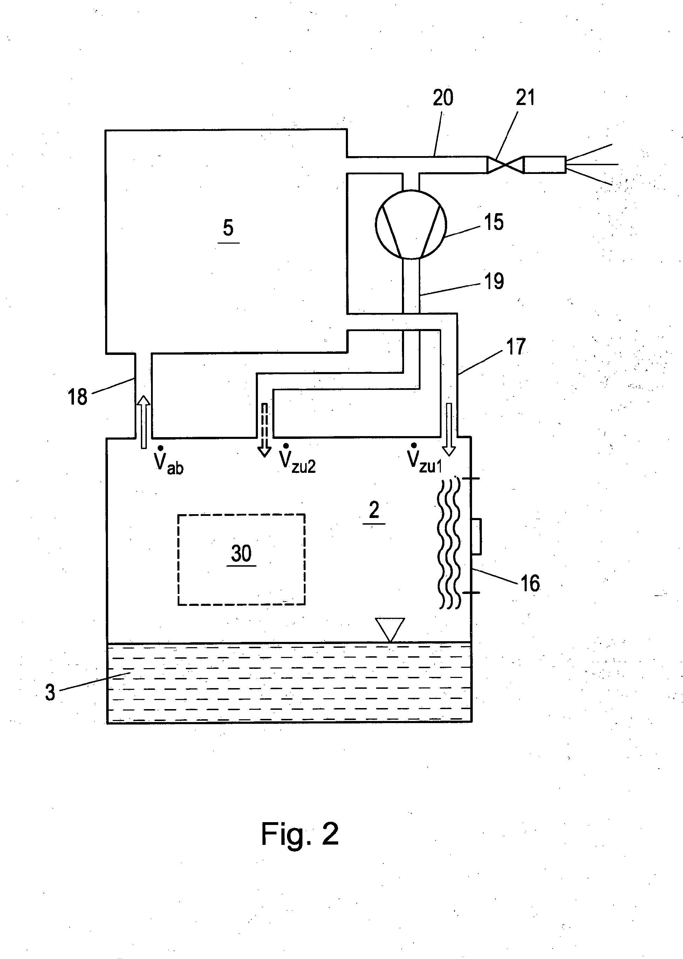

Die gegenständliche Erfindung wird nachfolgend unter Bezugnahme auf die beispielhaften und schematischen Figuren 1 und 2, die vorteilhafte Anlagenschemata zeigen, beschrieben, wobei Fig. 1 eine Anlage zeigt, die nicht unter den Schutzbereich der Ansprüche fällt.

Die erfindungsgemäße Reinigungsanlage 1 wie in Fig. 1 und 2 schematisch dargestellt umfasst einen Reinigungsraum 2, in dem im Betrieb ein Bauteil 30 angeordnet ist, wie in Fig.1 angedeutet, einen Reinigungsmittelbehälter 3 und eine Rückgewinnungsanlage 5. Das Reinigungsmittel im Reinigungsmittelbehälter 3 wird auf eine bestimmte Betriebstemperatur, z.B. 65°C, gehalten. Dazu kann im Reinigungsmittelbehälter 3 auch eine Reinigungsmittelheizung 4, wie in Fig. 1 angedeutet, vorgesehen sein, z.B. um das Reinigungsmittel auf Betriebstemperatur zu bringen bzw. zu halten. Als Reinigungsmittel kann z.B. Wasser mit einem chemischen Reiniger verwendet werden. Die Art der Reinigung des Bauteils 30 im Reinigungsraum 2 ist für die Erfindung nicht entscheiden. So könnten im Reinigungsraum 2 z.B. Sprühdüsen vorgesehen sein, oder es kann auch eine robotergeführte Düse oder ein robotergeführtes Bauteil 30 verwendet werden. Durch den Reinigungsvorgang entstehen im Reinigungsraum 2 Reinigungsmittel-Schwaden, also im Wesentlichen übersättigter Reinigungsmittel-Dampf, der kontinuierlich abzuführen ist. Auch könnten mehr als ein Bauteil 30 gleichzeitig im Reinigungsraum 2 angeordnet sein.

Zur Abfuhr der Reinigungsmittel-Schwaden ist eine Absaugung 7, z.B. ein Ventilator, in der Abluftleitung 18 vorgesehen. Bei solchen industriellen Reinigungsanlagen 1 können ungefähr hundert Luftwechsel pro Stunde notwendig sein, um die entstehenden Reinigungsmittel-Schwaden abzuführen. Bei einem Volumen von z.B. 30m³ im Reinigungsraum 2 muss die Absaugung 7 somit in der Lage sein 3000m³/h Abluft umzuwälzen. Die abgesaugte Abluft *V̇_{ab}* aus dem Reinigungsraum 2 wird der Rückgewinnungseinrichtung 5 zugeführt.

Vor der Absaugung 7, wie in Fig. 1 gezeigt, bzw. vor dem Kälteregister 8 kann eine Zuleitung 22 in die Abluftleitung 18 münden, mit der ein Aerosol, z.B. ein Aerosol aus Luft und Wasser, in die Abluft *V̇_{ab}* eingebracht wird, um den Wirkungsgrad der Kondensation zu verbessern, womit mehr Wärmeengerie und mehr Kondensat aus der Abluft rückgewonnen werden kann. In der Rückgewinnungseinrichtung 5 ist ein Kälteregister 8 (Verdampfer der Kältemaschine 6) angeordnet, über das die aus dem Reinigungsraum 2 abgeführte Abluft *V̇_{ab}* geführt wird. Das Kälteregister 8 kann z.B. mit einer Vielzahl von Kühlrippen oder Kühlschlangen ausgeführt sein, an denen die Abluft vorbeiströmt. Im Kälteregister 8 wird die Abluft *V̇_{ab}* abgekühlt, was eine Kondensation des in der Abluft *V̇_{ab}* enthaltenen Reinigungsmittels gewirkt Das kondensierte Reinigungsmittel wird über eine Kondensatleitung 10 in den Reinigungsmittelbehälter 3 geleitet. Auf diese Weise wird das in der Abluft *V̇_{ab}* enthaltene Reinigungsmittel zum größten Teil rückgewonnen.

Die abgekühlte, getrocknete Abluft *V̇_{ab}* wird weiter in ein Wärmeregister 9 (Kondensator der Kältemaschine 6) geleitet, wo die Abluft *V̇_{ab}* erwärmt wird, im Wesentlichen auf die Innenraumtemperatur im Reinigungsraum 2, also z.B. auf 65°C. Das Wärmeregister 9 kann z.B. mit einer Vielzahl von Heizrippen oder -schlangen ausgeführt sein, an denen die Abluft vorbeiströmt. Die erwärmte Abluft *V̇_{ab}* wird nun über die Zuluftleitung 17 in Form einer getrockneten, vorgewärmten Zuluft *V̇_{zul}* wieder dem Reinigungsraum 2 zugeführt. Auf diese Weise ist ein Umluftbetrieb realisiert, bei dem nichts an die Umgebung abgegeben werden muss. Es ist damit ein geschlossener Kreislauf verwirklicht, bei dem nahezu kein Reinigungsmittel verloren gehen kann.

Um die in der Abluft *V̇_{ab}* enthaltene Wärmemenge effizient nutzen zu können und rückzugewinnen, ist in der Rückgewinnungseinrichtung 5 eine Kältemaschine 6 vorgesehen. Die Kältemaschine 6 umfasst das Kälteregister 8 (Verdampfer), einen Verdichter 11 (z.B. ein Kompressor), eine Kühleinheit, hier z.B. einen Wärmetauscher 12, und das Wärmeregister 9, die miteinander durch Leitungen, in denen ein geeignetes Kältemittel geführt wird, verbunden sind. Das Kältemittel fließt durch das Kälteregister 8, z.B. durch die Kühlrippen, und nimmt im Kälteregister 8 durch Kondensation Wärme von der Abluft *V̇_{ab}* auf, wobei das Kältemittel dabei auch in den gasförmigen Aggregatzustand übergehen kann. Das erwärmte Kältemittel wird im Verdichter 11 komprimiert und damit weiter erwärmt und dem Wärmeregister 9 zugeführt, wo es z.B. die Heizrippen oder -schlangen durchströmt. Dort gibt das Kältemittel die der Abluft vorher entnommene Wärme wieder an die Abluft *V̇_{ab}* ab und erwärmt diese somit, wobei das Kältemittel dabei wieder verflüssigt werden kann. Das Kältemittel wird weiter über einen Wärmetauscher 12, z.B. ein Wasser- oder Luftwärmetauscher, geführt, in dem das Kältemittel weiter abgekühlt wird, um die Temperaturdifferenz zwischen Kältemittel und Ablufttemperatur zu erhöhen. Vom Wärmetauscher 12 wird das Kältemittel wieder dem Kälteregister 8 zugeführt, womit der Kältekreis geschlossen ist. Der Wärmetauscher 12 dient dazu, die zwangsweise vorhandenen Verluste im Kältekreis auszugleichen, was notwendig ist, wenn die Zuluft *V̇_{zu}* vorteilhaft im Wesentlichen auf dieselbe Temperatur gebracht werden soll wie die Abluft *V̇_{ab}.* Die Wärme der Abluft *V̇_{ab}* wird hier vollständig zur Vorwärmung der Zuluft *V̇_{zu}* verwendet, was energetisch sehr günstig ist.

Anstelle des Wärmetauschers 12 könnte als Kühleinheit in der Kältemaschine 6 auch ein Verdampfer einer weiteren Kältemaschine angeordnet sein, womit auch die im Kältemittel nach dem Wärmeregister verbleibende Wärme einer weiteren Nutzung zugeführt werden könnte.

In der Reinigungsanlage 1 kann weiters ein Trocknungsgebläse 15 vorgesehen sein, mit dem das gereinigte Bauteil 30 im Reinigungsraum 2 mit trockener Luft abgeblasen werden kann, z.B. um nach der Reinigung eine Vortrocknung des Bauteils 30 zu bewirken. Das Trocknungsgebläse 15 entnimmt dazu über eine Trockengebläseleitung 19 einen Teil der getrockneten, vorerwärmten Abluft und bläst diese in den Reinigungsraum 2, wodurch sich die Zuluft *V̇_{zu}* auf zwei Volumenströme *V̇*_{*zu*1} und *V̇*_{*zu*2} aufteilt.

Im Betrieb der Reinigungsanlage 1 ist über die Ansaugung 7 ein kontinuierlicher Umluftbetrieb vorgesehen, wobei das Trocknungsgebläse 15 vorteilhaft zyklisch für eine bestimmte Zeitspanne, z.B. am Ende jedes Reinigungsvorganges, aktiviert wird. Das Trocknungsgebläse 15 könnte aber ebenfalls kontinuierlich laufen.

Das Einbringen und Entfernen des Bauteils 30 in die Reinigungsanlage 1 erfolgt über eine Schotttür 16 im Gehäuse des Reinigungsraums 2. Das Öffnen der Schotttür 16 stellt in der Gesamtenergiebilanz natürlich eine Schwachstelle dar, da sich durch die Temperaturdifferenz zwischen Reinigungsraum 2 und Umgebung bei offener Schotttür 16 auch ein Druckgefälle von innen nach außen einstellt und damit Reinigungsmittel-Schwaden nach außen gelangen, wodurch bei jedem Öffnen der Schotttür 16, z.B. beim Bauteilwechsel, ein Ressourcenverlust entsteht. Um das zu verhindern wird die rückgeführte Zuluft *V̇_{zu}* im Bereich der Schotttür 16 erfindungsgemäß von oben in den Reinigungsraum 2 eingeblasen, siehe Fig. 2, womit sich im Reinigungsraum 2 hinter der Schotttür 16 ein Luftvorhang ausbildet, der das Nachaußendringen von Reinigungsmittel-Schwaden bei geöffneter Schotttür 16 im Wesentlichen verhindert.

Ebenso könnte in der Zuluftleitung 17 oder Trockengebläseleitung 19 eine Abblasleitung 20 angeordnet sein, siehe Fig. 2, über die bei geöffneter Schotttür 16 über ein Abblasventil 21 eine geringe Menge von Zuluft *V̇_{zu}* abgeblasen werden kann. Das führt dazu, dass für die kurze Zeit der geöffneten Schotttür 16, z.B. 2-3s, weniger Zuluft in den Reinigungsraum 2 zugeführt wird, als Abluft abgeführt wird. Damit wird der im Reinigungsraum 2 herrschende Druck kurzfristig abgesenkt, bevorzugt auf den Umgebungsdruck, sodass es im Wesentlichen zu keinen Luftaustausch bei geöffneter Schotttür 16 kommt.

Der Luftvorhang und die Zuluftabblasung können alternativ oder auch gleichzeitig vorgesehen sein und können auch bei Anlagen eingesetzt werden, bei denen die Zuluft *V̇_{zu}* nicht auf die Temperatur der Abluft *V̇_{ab}* gebracht wird.

Die Rückgewinnungseinrichtung 5 kann so gesteuert werden, dass eine gewünschte Temperatur der Zuluft *V̇_{zu}*, bevorzugt die Temperatur der Abluft *V̇_{ab}*, eingestellt wird. Dazu kann z.B. die umgewälzte Luftmenge konstant gehalten werden und die Kältemaschine 6 geregelt sein, z.B. der Verdichter 11 oder die Kühleinheit, z.B. der Wärmetauscher 12. Ein günstigerer Betrieb ergibt sich allerdings, wenn die Kältemaschine 6 in einem vorteilhaften, stabilen Betriebspunkt (z.B. hoher Wirkungsgrad) betrieben wird und die umgewälzte Luftmenge so eingestellt bzw. geregelt wird (z. B. über die Förderleistung der Absaugung 7), dass sich für die Temperatur der Zuluft derselbe Wert ergibt wie die Ablufttemperatur. Die Anlagenkomponenten können natürlich dimensioniert werden, um ein solches Optimum bei günstigen Betriebsbedingungen (z.B. Anzahl der Luftwechsel in der Anlage) zu ermöglichen.

## Patentansprüche

1. Reinigungsanlage zum Reinigen industriell gefertigter Bauteile (30) mit einem Reinigungsraum (2) und einer Absaugung (7) zum Absaugen von Abluft (*V̇_{ab}*) aus dem Reinigungsraum (2) und einer Rückgewinnungseinrichtung (5), in der eine Kältemaschine (6) mit einem Kälteregister (8), über das die Abluft (*V̇_{ab}*) geführt ist und dabei abkühlt und trocknet, und ein Wärmeregister (9) angeordnet ist, wobei die abgekühlte und getrocknete Abluft (*V̇_{ab}*) in der Rückgewinnungseinrichtung (5) über das Wärmeregister (9) der Kältemaschine (6) geführt ist und sich dabei auf die Temperatur der abgesaugten Abluft (*V̇_{ab}*) erwärmt und die derart erwärmte, getrocknete Abluft (*V̇_{ab}*) dem Reinigungsraum (2) als vorgewärmte, trockene Zuluft (*V̇_{zu}*) über eine Zuluftleitung (17) zugeführt wird, **dadurch gekennzeichnet, dass** die Zuluftleitung (17) im Bereich einer Schotttür (16) in den Reinigungsraum (2) mündet, um im Reinigungsraum (2) im Bereich der Schotttür (16) durch die zugeführte Zuluft (*V̇_{zu}*) einen Luftvorhang auszubilden.

2. Reinigungsanlage nach Anspruch 1, **dadurch gekennzeichnet, dass** in der Zuluftleitung (17) eine Abblasleitung (20) mit einem Abblasventil (21) vorgesehen ist.

3. Reinigungsanlage nach Anspruch 1, oder 2, **dadurch gekennzeichnet, dass** eine Kondensatleitung (10) zur Rückführung des im Kälteregister (8) kondensierten Reinigungsmittels in einen Reinigungsmittelbehälter (3) der Reinigungsanlage (1) vorgesehen ist.

4. Reinigungsanlage nach einem der Ansprüche 1 bis 3, **dadurch gekennzeichnet, dass** ein Trocknungsgebläse (15) vorgesehen ist, das über eine Trockengebläseleitung (19) einen Teil der erwärmten, getrockneten Abluft (*V̇_{ab}*) entnimmt und als Zuluft (*V̇*_{*zu*2}) in den Reinigungsraum (2) zuführt.

5. Reinigungsanlage nach Anspruch 4, **dadurch gekennzeichnet, dass** in der Trockengebläseleitung (19) eine Abblasleitung (20) mit einem Abblasventil (21) vorgesehen ist.

6. Reinigungsanlage nach einem der Ansprüche 1 bis 5, **dadurch gekennzeichnet, dass** in der Kältemaschine (6) ein Verdichter (11) und eine Kühleinheit vorgesehen sind und durch das Kälteregister (8) ein Kältemittel fließt und dabei Wärme von der durch das Kälteregister (8) strömende Abluft (*V̇_{ab}*) aufnimmt, dass der Verdichter (11) das Kältemittel verdichtet und dem Wärmeregister (9) zuführt, wo es Wärme an die durch das Wärmeregister (9) strömende Abluft (*V̇_{ab}*) abgibt, dass das Kältemittel vom Wärmeregister (9) in die Kühleinheit fließt, wo das Kältemittel weiter abkühlt, und dass Kältemittel von der Kühleinheit zum Schließen des Kältekreises in das Kälteregister (8) fließt.

7. Reinigungsanlage nach einem der Ansprüche 1 bis 6, **dadurch gekennzeichnet, dass** eine in die Abluftleitung (18) mündende Zuleitung (22) zur Einbringung eines Aerosols in die Abluft (*V̇_{ab}*) aus dem Reinigungsraum (2) vorgesehen ist.

8. Verfahren zur Ressourcenrückgewinnung in einer Reinigungsanlage (1) zum Reinigen industriell gefertigter Bauteile (30), bei dem Abluft (*V̇_{ab}*) aus einem Reinigungsraum (2) der Reinigungsanlage (1) über ein Kälteregister (8) einer Kältemaschine (6) geleitet und dabei abgekühlt und getrocknet wird und die Abluft (*V̇_{ab}*) vom Kälteregister (8) in ein Wärmeregister (9) der Kältemaschine (6) geleitet und dort auf die Temperatur der Abluft (*V̇_{ab}*) erwärmt wird und die erwärmte, trockene Abluft (*V̇_{ab}*) von dort als Zuluft (*V̇_{zu}*) wieder in den Reinigungsraum (2) rückgeführt wird, **dadurch gekennzeichnet, dass** die Zuluft *(V̇_{zu})* zur Ausbildung eines Luftvorhanges im Bereich einer Schotttür (16) der Reinigungsanlage (1) in den Reinigungsraum (2) zugeführt wird.

9. Verfahren nach Anspruch 8, **dadurch gekennzeichnet, dass** ein Teil der Zuluft (*V̇_{zu}*) bei geöffneter Schotttür (16) über eine Abblasleitung (20) in die Umgebung abgegeben wird.

10. Verfahren nach Anspruch 8 oder 9, **dadurch gekennzeichnet, dass** das im Kälteregister (8) kondensierte Reinigungsmittel wieder in einen Reinigungsmittelbehälter (3) rückgeführt wird.

11. Verfahren nach einem der Ansprüche 8 bis 10, **dadurch gekennzeichnet, dass** ein Teil der im Wärmeregister (9) erwärmten Abluft (*V̇_{ab}*) über ein Trocknungsgebläse (15) in den Reinigungsraum (2) rückgeführt wird.

12. Verfahren nach einem der Ansprüche 8 bis 11, **dadurch gekennzeichnet, dass** im Kälteregister (8) ein Kältemittel Wärme von der durch das Kälteregister (8) strömende Abluft (*V̇_{ab}*) aufnimmt, **dass** das Kältemittel in einem Verdichter (11) verdichtet wird und dem Wärmeregister (9) zugeführt wird, wo es Wärme an die durch das Wärmeregister (9) strömende Abluft (*V̇_{ab}*) abgibt, **dass** das Kältemittel vom Wärmeregister (9) in eine Kühleinheit geleitet wird, wo das Kältemittel weiter abgekühlt wird, und **dass** Kältemittel von der Kühleinheit in das Kälteregister (8) geleitet wird.

13. Verfahren nach einem der Ansprüche 8 bis 12, **dadurch gekennzeichnet, dass** in die Abluft (*V̇_{ab}*) aus dem Reinigungsraum (2) ein Aerosol eingebracht wird.

## Claims

1. A cleaning system for cleaning industrially produced components (30), comprising a cleaning chamber (2) and a suction device (7) for suctioning off waste air (*V̇_{ab}*) from the cleaning chamber (2), and a recovery device (5) in which a refrigeration device (6) with a cooling register (8), through which the waste air (*V̇_{ab}*) is guided and thus is cooled and dried, and a heat register (9) are arranged, wherein the suctioned-off waste air (*V̇_{ab}*) in the recovery device (5) is guided through the heat register (9) of the refrigeration device (6) and is thereby heated substantially to the temperature of the waste air (*V̇_{ab}*), and the waste air (*V̇_{ab}*) heated and dried in this manner is supplied to the cleaning chamber (2) as preheated dried supply air (*V̇_{zu}*) via a supply air line (17), **characterized in that** the supply air line (17) leads into the cleaning chamber (2) in the region of a bulkhead door (16) so as to form an air curtain in the region of the bulkhead door (16) with the supplied supply air (*V̇_{zu}*)*.*

2. The cleaning system according to claim 1, **characterized in that** a blow-off line (20) with a blow-off valve (21) is provided in the supply air line (17).

3. The cleaning system according to claim 1 or 2, **characterized in that** a condensate line (10) is provided for recirculating the cleaning agent condensed in the cooling register (8) into a cleaning agent container (3) of the cleaning system (1).

4. The cleaning system according to any one of the claims 1 to 3, **characterized in that** a blow dryer (15) is provided which removes a portion of the heated dried waste air (*V̇_{ab}*) via a blow dryer line (19) and supplies it as supply air (*V̇*_{*zu*2}) into the cleaning chamber (2).

5. The cleaning system according to claim 4, **characterized in that** a blow-off line (20) with a blow-off valve (21) is provided in the blow dryer line (19).

6. The cleaning system according to any one of the claims 1 to 5, **characterized in that** a compressor (11) and a cooling unit are provided in the refrigeration device (6), and in the cooling register (8), a refrigerant absorbs heat from the waste air (*V̇_{ab}*) flowing through the cooling register (8), that the compressor (11) compresses the refrigerant and supplies it to the heat register (9) where it dissipates heat to the waste air (*V̇_{ab}*) flowing through the heat register (9), that the refrigerant flows from the heat register (9) into the cooling unit where the refrigerant continues to cool down, and that, for closing the cooling cycle, refrigerant flows from the cooling unit into the cooling register (8).

7. The cleaning system according to any one of the claims 1 to 6, **characterized in that** a supply line (22) is provided that ends in the waste air line (18) for introducing an aerosol into the waste air (*V̇_{ab}*) from the cleaning chamber (2).

8. A method for recovering resources in a cleaning system (1) for cleaning industrially produced components (30), in which waste air (*V̇_{ab}*) from a cleaning chamber (2) of the cleaning system (1) is conveyed over a cooling register (8) of a refrigeration device (6) and thus is cooled and dried and the waste air (*V̇_{ab}*) from the cooling register (8) is conveyed into a heat register (9) of the refrigeration device (6) and is heated there to the temperature of the waste air (*V̇_{ab}*), and the heated dried waste air (*V̇_{ab}*) is recirculated from there as supply air (*V̇_{zu}*) into the cleaning chamber (2), **characterized in that** the supply air (*V̇_{zu}*) is supplied into the cleaning chamber (2) so as to form an air curtain in the region of the bulkhead door (16) of the cleaning system (1).

9. The method according to claim 8, **characterized in that** a portion of the supply air (*V̇_{zu}*) is discharged into the surroundings via a blow-off line (20) when the bulkhead door (16) is open.

10. The method according to claim 8 or 9, **characterized in that** the cleaning agent condensed in the cooling register (8) is recirculated into a cleaning agent container (3).

11. The method according to any one of the claims 8 to 10, **characterized in that** a portion of the waste air (*V̇_{ab}*) heated in the heat register (9) is recirculated into the cleaning chamber (2) via a blow dryer (15).

12. The method according to any one of the claims 8 to 11, **characterized in that** in the cooling register (8), a refrigerant absorbs heat from the waste air (*V̇_{ab}*) flowing through the cooling register (8), that the refrigerant is compressed in a compressor (11) and is supplied to the heat register (9) where it dissipates heat to the waste air (*V̇_{ab}*) flowing through the heat register (9), that the refrigerant is conveyed from the heat register (9) into a cooling unit where the refrigerant is further cooled down, and that refrigerant is conveyed from the cooling unit into the cooling register (8).

13. The method according to any one of the claims 8 to 12, **characterized in that** an aerosol is introduced into the waste air (*V̇_{ab}*) from the cleaning chamber (2).

## Revendications

1. Système de nettoyage servant à nettoyer des composants (30) fabriqués industriellement, comprenant une chambre de nettoyage (2) et un dispositif d'aspiration (7) servant à aspirer de l'air sortant (V_{ab}) de provenant de la chambre de nettoyage (2) et un dispositif de récupération (5) dans lequel est disposée une machine de réfrigération (6) comportant une section froide (8), permettant de guider, refroidir et sécher l'air sortant (V_{ab}), et une section chaude, l'air (V_{ab}) refroidi et séché étant guidé dans le dispositif de récupération (5) par la section chaude (9) de la machine réfrigération {6) et étant chauffé à la température de l'air sortant (V_{ab}) aspiré et l'air (V_{ab}) séché et chauffé étant amené à la chambre de nettoyage (2) en tant qu'air amené (V_{zu}) préchauffé et séché par un conduit d'amenée d'air (17), **caractérisé en ce que** le conduit d'amenée d'air (17) débouche dans la chambre de nettoyage (2) au niveau d'une porte étanche (16) pour former par le biais de l'air amené (V_{zu}) un rideau d'air au niveau de la porte étanche (16) dans la chambre de nettoyage (2).

2. Système de nettoyage selon la revendication 1, **caractérisé en ce qu'**un conduit de purge (20), comportant une valve de purge (21), est disposé dans le conduit d'amenée d'air (17).

3. Système de nettoyage selon la revendication 1 ou 2, **caractérisé en ce qu'**un conduit de condensat (10) est prévu pour ramener l'agent de nettoyage, condensé dans la section froide (8), dans un récipient d'agent de nettoyage (3) du système de nettoyage (1).

4. Système de nettoyage selon l'une des revendications 1 à 3, **caractérisé en ce qu'**il est prévu un ventilateur de séchage (15) qui enlève une partie de l'air sortant (V_{ab}) chauffé séché par le biais d'un conduit de ventilateur de séchage (19) et l'amène en tant qu'air amené (V_{zu2}) dans la chambre de nettoyage (2).

5. Système de nettoyage selon la revendication 4, **caractérisé en ce qu'**un conduit de purge (20) comportant une soupape de purge (21) est prévu dans le conduit de ventilateur de séchage (19).

6. Système de nettoyage selon l'une des revendications 1 à 5, **caractérisé en ce qu'**un compresseur (11) et une unité de réfrigération sont prévus dans la machine de réfrigération (6) et un réfrigérant s'écoule à travers la section froide (8) et de la chaleur est absorbée par l'air sortant (V_{ab}) s'écoulant à travers la section froide (8), **en ce que** le compresseur (11) comprime le réfrigérant et l'amène à la section chaude (9) où le réfrigérant délivre la chaleur à l'air sortant (V_{ab}) s'écoulant à travers la section chaude (9), **en ce que** le réfrigérant s'écoule de la section chaude (9) dans l'unité de réfrigération où le réfrigérant est encore refroidi, et **en ce que** le réfrigérant s'écoule de l'unité de réfrigération jusque dans la section froide (8) pour fermer le circuit de réfrigération.

7. Système de nettoyage selon l'une des revendications 1 à 6, **caractérisé en ce qu'**un conduit d'amenée (22), débouchant dans le conduit d'air sortant (18), est prévu pour introduire un aérosol dans l'air sortant (V_{ab}) provenant de la chambre de nettoyage (2).

8. Procédé de récupération de ressources dans un système de nettoyage (1) servant à nettoyer des composants (30) fabriqués industriellement, dans lequel l'air sortant (V_{ab}) provenant d'une chambre de nettoyage (2) du système de nettoyage (1) est passé par une section froide (8) d'une machine de réfrigération (6) et est refroidi et séché et l'air sortant (V_{ab}) est guidé de la section froide (8) jusque dans une section chaude (9) de la machine de réfrigération (6) et est chauffé à la température de l'air sortant (V_{ab}) et l'air sortant (V_{ab}) séché et chauffé est ramené en tant qu'air amené (V_{zu}) dans la chambre de nettoyage (2), **caractérisé en ce que** l'air amené (V_{zu}) est ramené dans la chambre de nettoyage (2) pour former un rideau d'air au niveau d'une porte étanche (16) du système de nettoyage (1).

9. Procédé selon la revendication 8, **caractérisé en ce qu'**une partie de l'air amené (V_{zu}) est déchargée dans l'environnement par le biais d'un conduite de purge (20) lorsque la porte étanche (16) est ouverte.

10. Procédé selon la revendication 8 ou 9, **caractérisé en ce que** l'agent de nettoyage condensé dans la section froide (8) est ramené dans un récipient d'agent de nettoyage (3).

11. Procédé selon l'une des revendications 8 à 10, **caractérisé en ce qu'**une partie de l'air sortant (V_{ab}), chauffé dans la section chaude (9), est ramené dans la chambre de nettoyage (2) par un ventilateur de séchage (15).

12. Procédé selon l'une des revendications 8 à 11, **caractérisé en ce que** dans la section froide (8) un réfrigérant absorbe de la chaleur provenant de l'air sortant (V_{ab}) s'écoulant à travers la section froide (8), **en ce que** le réfrigérant est comprimé dans un compresseur (11) et amené à la section chaude (9) où il dégage de la chaleur vers l'air sortant (V_{ab}) s'écoulant à travers la section chaude (9), **en ce que** le réfrigérant est guidé de la section chaude (9) jusque dans une unité de réfrigération où le réfrigérant est encore refroidi, et **en ce que** le réfrigérant est guidé de l'unité de réfrigération jusque dans la section froide (8).

13. Procédé selon l'une des revendications 8 à 12, **caractérisé en ce qu'**un aérosol est introduit dans l'air sortant (V_{ab}) provenant de la chambre de nettoyage (2).
